(19) Europäisches Patentamt
European Patent Office
Office européen des brevets

(11) Publication number: 0 122 599
B1

(12) # EUROPEAN PATENT SPECIFICATION

(45) Date of publication of the patent specification: 05.11.86

(51) Int. Cl.⁴: C 09 B 62/51, D 06 P 3/66, D 06 P 3/10, C 09 B 67/26

(21) Application number: 84104103.1

(22) Date of filling: 12.04.84

(54) **Fiber-reactive yellow azo dyestuffs.**

(30) Priority: 18.04.83 US 485692

(43) Date of publication of application: 24.10.84 Bulletin 84/43

(45) Publication of the grant of the patent: 05.11.86 Bulletin 86/45

(84) Designated Contracting States: CH DE FR GB IT LI

(56) References cited: US-A-3 519 616

**The file contains technical information submitted after the application was filed and not included in this specification**

(73) Proprietor: AMERICAN HOECHST CORPORATION, Route 202- 206 North, Somerville, N.J. 08876 (US)

(72) Inventor: Corso, Anthony J., 5 Crocus Court, Coventry Rhode Island 02816 (US)
Inventor: Phillips, Thomas S., 9 Fifth Street, E. Greenwich Rhode Island 02818 (US)

(74) Representative: Becker, Heinrich Karl Engelbert, Dr., HOECHST AKTIENGESELLSCHAFT Central Patent Department P.O. Box 80 03 20, D-6230 Frankfurt am Main 80 (DE)

EP 0 122 599 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convension).

LIBER, STOCKHOLM 1986

**Description**

The present invention provides new water-soluble, fiberreactive monoazo dyestuffs, and liquid compositions thereof.

In US-PS 3,519,616, there is disclosed, in Example 3, a reactive dyestuff of the formula

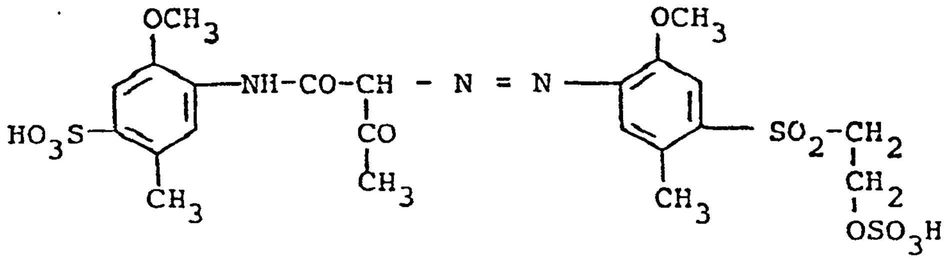

which is said to provide greenish yellow dyeings having good fastness to wetting and to light.

Applicants have now found new, water-soluble fiber-reactive dyestuffs of the general formula (1)

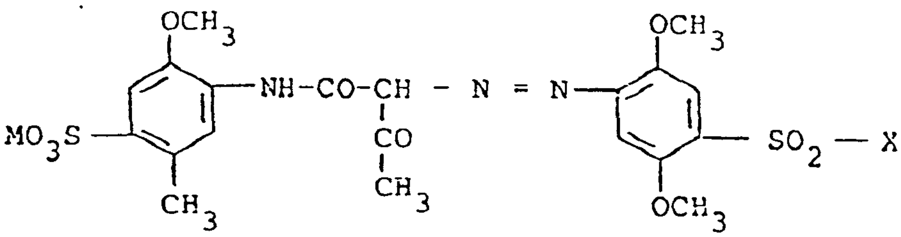

(1)

wherein M is hydrogen or an alkali metal, such as sodium, potassium or lithium, or the equivalent of an alkaline earth metal, such as of calcium, and X is the vinyl group or a group of the general formula (2)

$- CH_2 - CH_2 - Z$ (2)

in which Z is hydroxy, chlorine, bromine, sulfato (of the formula $-OSO_3M$ with M being defined as above), thiosulfato (of the formula $-S-SO_3M$ with M being defined as above), phosphato (of the formula $-OPO_3M_2$ with M being defined as above), acetyloxy, propionyloxy or di-(lower alkyl)-amino. Liquid compositions containing 5 to 45 % of said dyestuff in water are also provided.

The term "lower" means that the group indicated so, contains 1 to 4 C-atoms.

The dyestuff of the present invention can be prepared according to the invention by coupling the N-acetoacetyl derivative of 2-methoxy-5-methyl-4-sulfo-aniline of the formula (3)

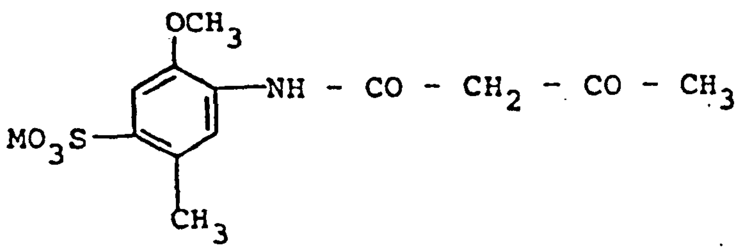

(3)

in which M is defined as above, with a diazotized amino compound of the general formula (4)

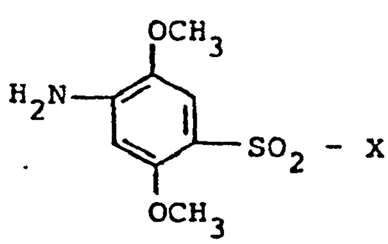

(4)

in which X is defined as above, while employing the conventional coupling conditions for preparing acetoacetylanilide-azo dyestuffs, such as a temperature of from 0° C to 25° C and a pH of from 4 to 7.

After preparation, the dyestuff may be isolated as a powder, either by salting it out of solution or by spray

drying, and brought to standard strength by the addition of inorganic salt, generally sodium sulfate. Advantageously, the prepared dyestuff may be used directly as a liquid composition after standardizing with water. Such liquid compositions will contain from 5 to 45 % (by weight) of the water soluble dyestuff of the present invention, preferably 10 to 20 %, and water. Said liquid composition may also optionally contain from 0 to 10 %, preferably 0 to 6 %, of inert inorganic salt, typically the alkali metal (lithium, sodium, potassium) and ammonium chlorides and sulfates and mixtures thereof. While said liquid composition may also optionally contain up to 5 % of buffer substances, it is preferred that the composition remain substantially free of a buffer. It is also preferred that liquid compositions of the dyestuff having the β-sulfatoethylsulfonyl group be maintained at a pH of from about 2.5 to about 4.5 for maximum stability.

The dyestuff of the present invention is suitable for the dyeing of cellulosic materials such as cotton, linen, viscose rayon or staple fibers. It can be applied by any one of the usual dyeing and printing methods for reactive dyestuffs and yields on cellulosic materials, in the presence of alkaline agents, brilliant yellow shades having excellent fastness properties, and particularly superior color yield and build up (ratio of dyestuff concentration to color intensity) in both exhaust and continuous dyeings. The present dyestuffs may also be used on wool, silk or polyamide fibers.

The invention may be further illustrated by the following Examples in which the parts and percentages are by weight.

**EXAMPLE 1**

68.2 Parts of 2,5-dimethoxyaniline-4-β-sulfatoethylsulfone were dissolved in 320 parts of water at pH 6.0-6.5 by the addition of 14 parts of sodium carbonate. 28 parts of celite and 8 parts of Fuller's Earth were added and the solution clarified. The residue was washed with 100 parts of water. 28 parts of 93 % sulfuric acid was added, the solution iced to 0-5°C and diazotized with 33.8 parts of an aqueous 40.1 % sodium nitrite solution. The excess nitrite was decomposed by the addition of one part of sulfamic acid. The diazo solution was then added to a slurry consisting of 135 parts of water and 56 parts of 2-methoxy-5-methyl-4-sulfo-acetoacetanilide while maintaining the pH at 4-5 with 16 parts of sodium carbonate. The resulting solution was spray dried to yield 188.3 parts of a dyestuff powder containing 15.0 % inorganic sulfate salts and 0.09 % inorganic chloride salts, and the alkali metal salt of the formula

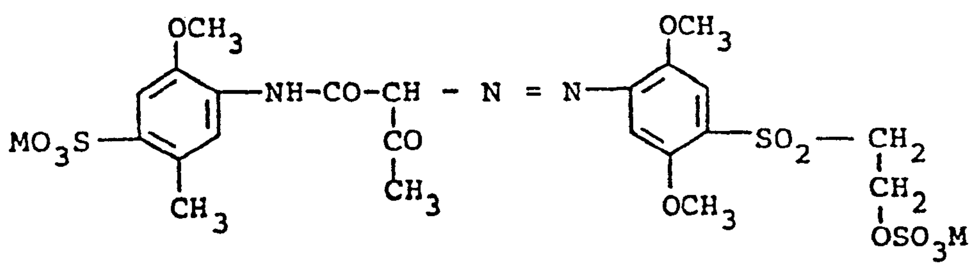

This powder may then be blended with 125.5 parts of anhydrous sodium sulfate to yield 313.8 parts of standard strength powder.

Alternatively, the dyestuff solution of Example 1 before spray-drying can be standardized as a liquid dyestuff solution by the addition of water and adjusting the pH to 2.5-4.5 to yield, for example, 1255 parts of standardized liquid dyestuff.

**Example 2**

Liquid compositions of this β-sulfatoethylsulfonyl dyestuff were tested for stability in the following manner: A liquid composition of said dyestuff, obtainable by making the aqueous dyestuff solutions up to containing about 14-18 % dyestuff and 0 to 6 % inorganic salt was placed in a covered glass container, adjusted to an initial pH as indicated in the following Table and stored in an oven at 40°C.

Each aqueous dyestuff sample was analyzed for vinylsulfone content prior to the storage test and from time to time thereafter. The net increase in vinylsulfone content for various storage periods is shown in the Table. As can be seen from the Table, the liquid dyestuff composition maintained at pH 4.5 (or lower) and containing no buffer showed dramatically less vinylsulfone formation during storage than the corresponding composition maintained at higher pH.

| Initial pH | Buffer Content | Vinylsulfone formation (final % minus initial %) 7 days | 14 days | 28 days | 105 days |
|---|---|---|---|---|---|
| 5.5 | 0 % | 3.7 % | 4.5 % | 5.3 % | 7.8 % |
| 4.5 | 0 % | 0.8 % | 0.7 % | 1.4 % | 2.4 % |

**Example 3**

48.6 Parts of 2,5-dimethoxy-aniline-4-vinylsulfone, dissolved in a mixture of 300 parts of water and 28 parts of an aqueous 93 % sulfuric acid, were diazotised at a temperature of 0 - 5°C by means of 33.8 parts of an aqueous 40.1 % sodium nitrite solution in the conventional manner. The excess nitrite was decomposed by the addition of one part of sulfamic acid. The diazo solution was then added to a slurry consisting of 135 parts of water and 56 parts of 2-methoxy-5-methyl-4-sulfo-acetoacctanilide while maintaining the pH at 4-5 with 16 parts of sodium carbonate.

The dyestuff according to the invention, obtained, is separated by saling out with sodium chloride and isolated by filtration. After drying, a dyestuff powder is obtained containing, besides electrolytes (such as sodium chloride), the alkali metal salt (sodium salt) of the compound of the formula

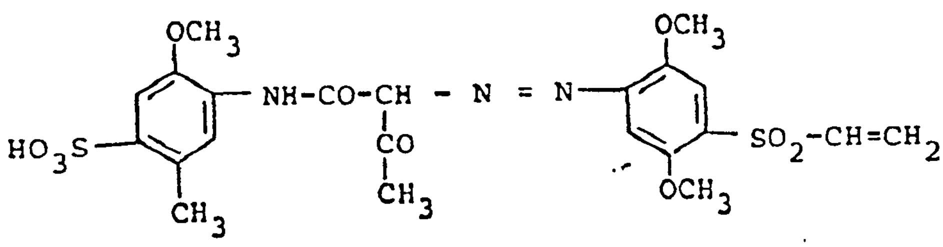

This azo compound according to the invention has very good dyestuff properties, as mentioned in the description part.

**Examples 4 and 5**

In the Table Example which follow, further monoazo dyestuffs according to the invention are described in the free acid form. They are preferably in form of their alkali metal salts, such as sodium, potassium or lithium salts. They can be prepared, according to the invention, analogously to Example 1, employing the equivalent amount of 2,5-dimethoxy-aniline-4-β-thiosulfatoethylsulfone or 2,5-dimethoxy-aniline-4-β-phosphatoethylsulfone in place of 2,5-dimethoxy-aniline-4-β-sulfatoethylsulfone as the diazo component. These azo dyestuffs according to the invention have also good fibre reactive dyestuff properties, and they yield, by application and fixation methods conventionel in the dyeing and printing technigue for fibre reactive dyestuffs, on the materials mentioned in the description part, brilliant yellow dyeings and prints having good fastness properties.

| Example | Dyestuff according to the invention |
|---|---|
| 4 | 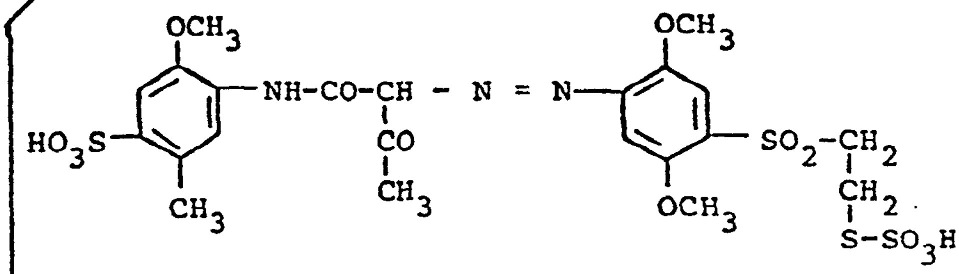 |
| 5 | 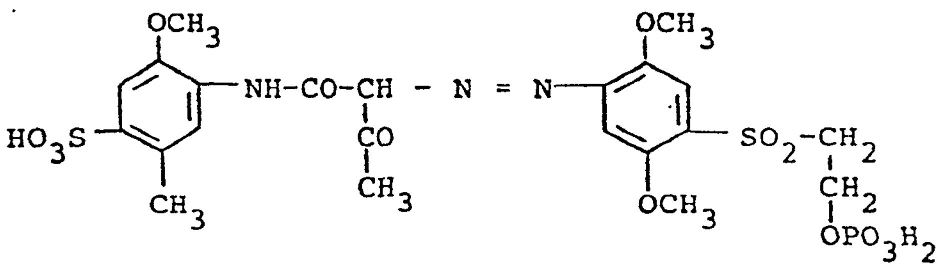 |

**Examples 6 to 8**

In the Table Examples which follow, further monoazo dyestuffs according to the invention are described in the free acid form. They are preferably in form of their alkali metal salts, such as sodium, potassium or lithium salts. They can be prepared, according to the invention, analogously to Example 3, employing the equivalent amount of 2,5-dimethoxy-aniline-4-β-acetyloxyethylsulfone or 2,5-di-methoxy-aniline-4-β-propionyloxyethylsulfone or 2,5-dimethoxy-aniline-4-β-diethylaminoethylsulfone in place of 2,5-dimethoxy-aniline-4-vinylsulfone as the diazo component. These azo dyestuffs according to the invention have also good fibre reactive dyestuff properties, and they yield by application and fixation methods conventional in the dyeing and printing technique for fibre reactive dyestuffs, on the materials mentioned in the description part, brilliant yellow dyeings and prints having good fastness properties.

| Example | Dyestuff according to the invention |
|---|---|
| 6 | 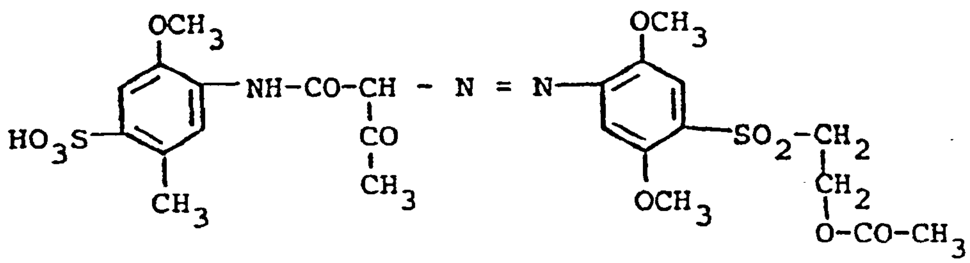 |
| 7 | 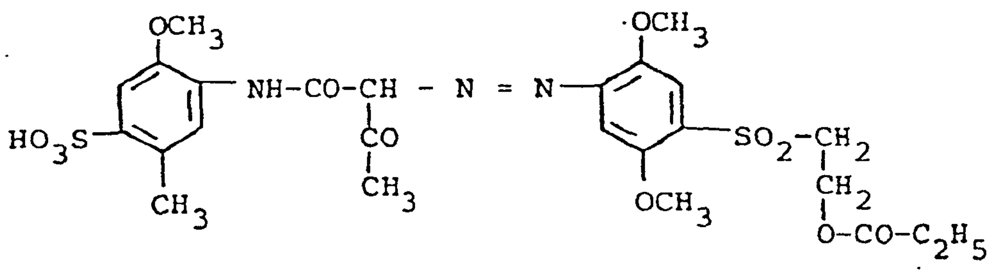 |
| 8 | 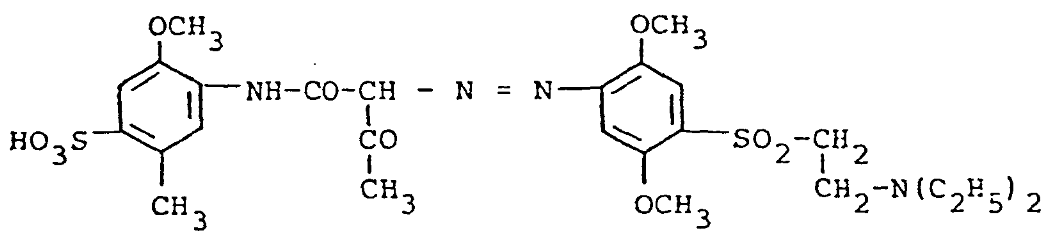 |

**Example 9**

100 Parts of a woolen yarn are prewashed in usual manner and introduced into 3,000 parts of an aqueous dyebath having a temperature of 40°C, which contains 2 parts of ammonium acetate and the pH of which has been adjusted at 5.5 by acetic acid. The material is treated for 5 minutes in said bath. 3 Parts of the dyestuff according to the invention as specified in Example 3, which have been dissolved in a small quantity of water, are added, the dyebath is heated within 30 minutes to boiling temperature and the material is treated at said temperature for 45 minutes. The yarn is removed from the bath, rinsed with water, then in an aqueous bath containing a small quantity of acetic acid and with water again, and dried.

There is obtained a dyeing having a clear, brilliant yellow shade and having very good fastness properties to wetting.

**Claims**

1. A water-soluble fiber-reactive dyestuff of the general formula (1)

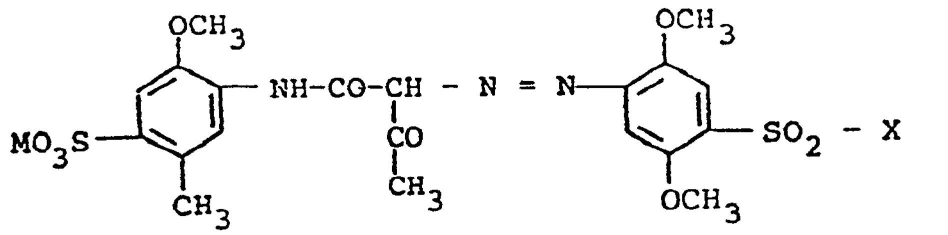

(1)

wherein M is hydrogen or an alkali metal, or the equivalent of an alkaline earth metal, and X is the vinyl group or a group of the general formula (2)

$- CH2 - CH_2 - Z$ (2)

in which Z is hydroxy, chlorine, bromine, sulfato, thiosulfato, phosphato, acetyloxy, propionyloxy or di-(lower alkyl)-amino.

2. A dyestuff according to claim 1 of the formula

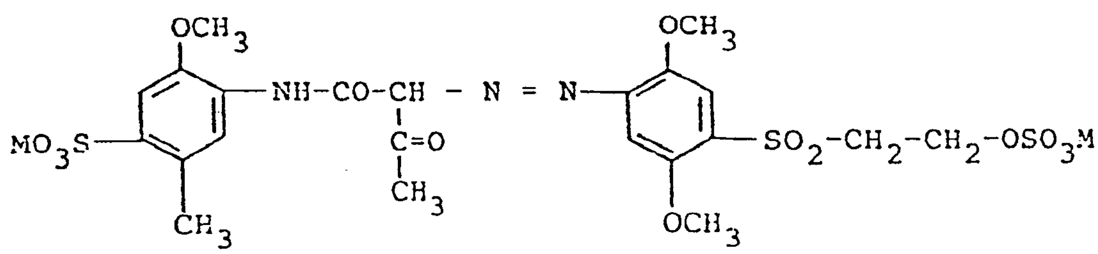

in which M is defined as in claim 1.

3. A dyestuff according to claim 1 of the formula

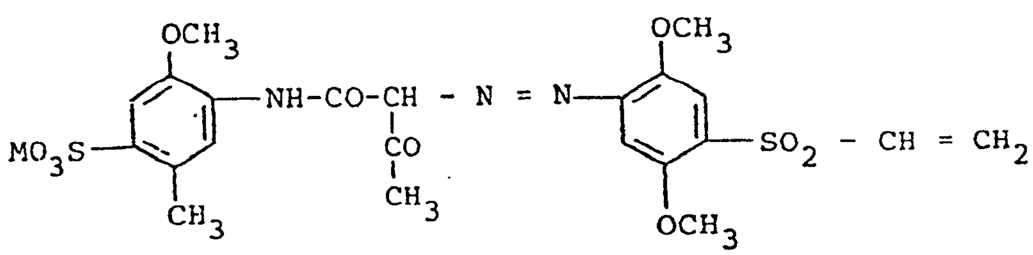

in which M is defined as in claim 1.

4. A process for the preparation of a dyestuff of the general formula (1) mentioned and defined in claim 1, which comprises coupling a compound of the formula (3)

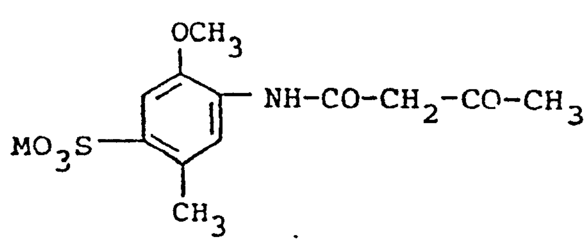

in which M is defined as in claim 1, with a diazotized amino compound of the general formula (4)

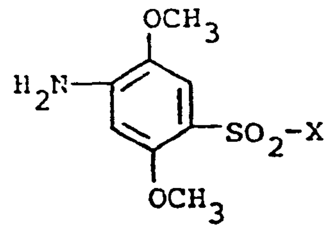

in which X is defined as in claim 1.

5. A liquid dyestuff composition comprising 5 to 45 % of a water-soluble dyestuff according to claim 1, and water.

6. A liquid dyestuff composition comprising 5 to 45 % of a water-soluble dyestuff according to claim 2, and water.

7. A liquid dyestuff composition according to claim 5 or 6, which additionally comprises from 0 to 6 % inert inorganic salt.

8. A liquid dyestuff composition according to claim 5, 6 or 7, wherein said inert inorganic salt is selected from the alkali metal and ammonium chlorides and sulfates and mixtures thereof.

9. A liquid dyestuff composition according to claim 5, 6, 7 or 8, which comprises from 10 to 20 % of said watersoluble dyestuff.

10. A liquid dyestuff composition according to claim 5, 6, 7, 8 or 9, which is maintained at a pH of from about 2.5 to about 4.5.

11. Use of a dyestuff of claim 1 for coloring a material made of cellulose, wool, silk and/or polyamide fibers.

12. A process for coloring a material made of cellulose, wool, silk and/or polyamide fibers, which comprises bringing in contact an aqueous solution of the dyestuff of formula (1) of claim 1, with said material and subjecting the material treated thus to the action of heat and/or of an agent having an alkaline reaction.

**Patentansprüche**

1. Ein wasserlöslicher faserreaktier Farbstoff der allgemeinen Formel (1)

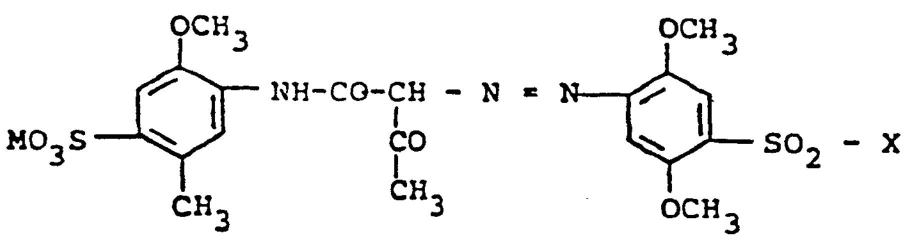

(1)

in welcher M Wasserstoff oder ein Alkalimetall oder das Äquivalent eines Erdalkalimetalls ist und X die Vinylgruppe oder eine Gruppe der allgemeinen Formel (2)

$-CH_2-CH_2-Z$ (2)

ist, in welcher Z gleich Hydroxy, Chlor, Brom, Sulfato, Thiosulfato, Phosphato, Acetgloxy, Propionyloxy oder Di-(niederes Alkyl)-amino ist.

2. Ein Farbstoff gemäß Anspruch 1 der Formel

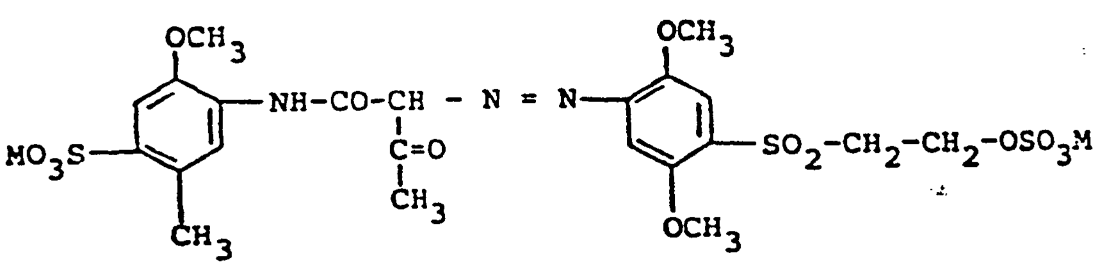

in welcher M wie in Anspruch 1 definiert ist.

3. Ein Farbstoff gemäß Anspruch 1 der Formel

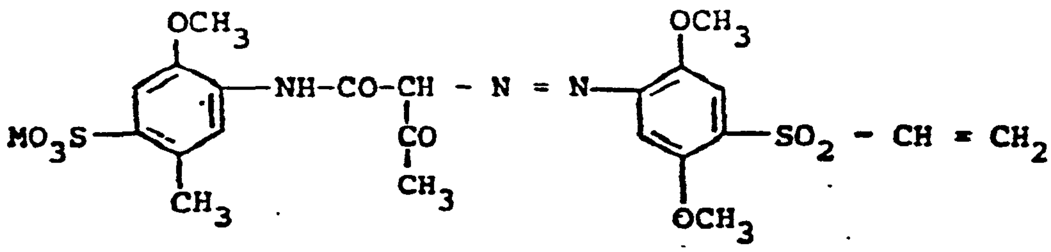

in welcher M wie in Anspruch 1 definiert ist.

4. Ein Verfahren zur Herstellung eines Farbstoffes der in Anspruch 1 erwähnten und definierten allgemeinen Formel (1), nach welchem man eine Verbindung der Formel (3)

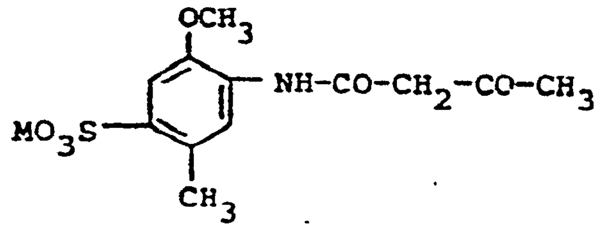

in welcher M wie in Anspruch 1 definiert ist, mit einer diazotierten Aminoverbindung der allgemeinen Formel (4)

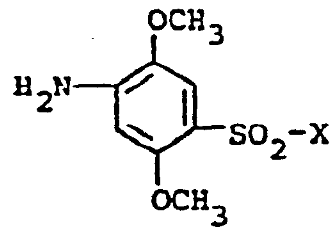

in welcher M wie in Anspruch 1 definiert ist, kuppelt.

5. Eine flüssige Farbstoffzubereitung, enthaltend 5 bis 45 % eines wasserlöslichen Farbstoffes gemäß Anspruch 1 und Wasser.

6. Eine flüssige Farbstoffzubereitung, enthaltend 5 bis 45 % eines wasserlöslichen Farbstoffes gemäß Anspruch 2 und Wasser.

7. Eine flüssige Farbstoffzubereitung gemäß Anspruch 5 oder 6, die zusätzlich 0 bis 6 % eines inerten organischen Salzes enthält.

8. Eine flüssige Farbstoffzubereitung gemäß Anspruch 5, 6 oder 7, bei welcher das inerte anorganische Salz aus Alkalimetall- und Ammoniumchloriden und -sulfaten und deren Mischungen gewählt wird.

9. Eine flüssige Farbstoffzubereitung gemäß Anspruch 5, 6, 7 oder 8, die 10 bis 20 % des genannten wasserlöslichen Farbstoffes enthält.

10. Eine flüssige Farbstoffzubereitung gemäß Anspruch 5, 6, 7, 8 oder 9, die bei einem pH-Wert von etwa 2,5 bis etwa 4,5 gehalten wird.

11. Verwendung eines Farbstoffes gemäß Anspruch 1 zum Färben eines Materials aus Cellulose, Wolle, Seide und/oder Polyamidfasern.

12. Ein Verfahren zum Färben eines Materials aus Cellulose, Wolle, Seide, und/oder polyamidfasern, nach welchem man eine wäßrige Lösung des Farbstoffes der Formel (1) von Anspruch 1 mit dem genannten Material in Kontakt bringt und das so behandelte Material der Wirkung von Hitze und/oder eines alkalischen reagierenden Mittels aussetzt.

**Revendications**

1. Colorants reactifs (à l'égard des fibres) hydrosolubles qui répondent à la formule générale 1:

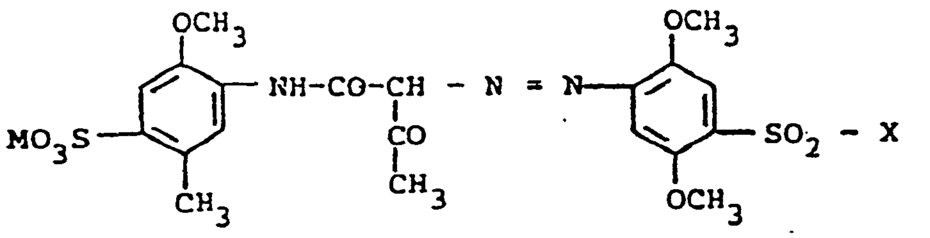
(1)

dans laquelle M représente l'hydrogène, un métal alcalin ou un équivalent d'un métal alcalino-terreux, et X représente un radical vinyle ou un radical répondant à la formule 2:

$- CH_2 - CH2 - Z$ (2)

dans laquelle Z représente un radical hydroxy, le chlore, le brome ou un radical sulfato, thiosulfato, phosphato, acétyloxy,propionyloxy ou dialkylamino (à alkyles inférieurs).

2. Colorants selon la revendication 1 qui répondent à la formule:

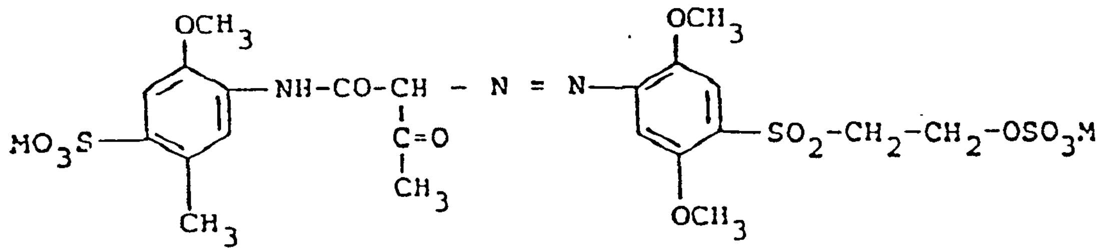

dans laquelle M a la signification donnée à la revendication 1.

3. Colorants selon la revendication 1 qui répondent à la formule:

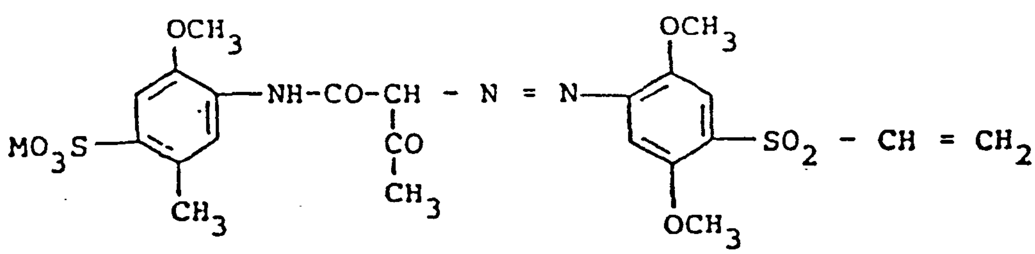

dans laquelle M a la signification donnée à la renvendication 1.

4. Procédé de préparation d'un colorant répondant à la formule générale 1 qui a été représentée et définie à la revendication 1, procédé selon lequel on copule un composé répondant à la formule 3:

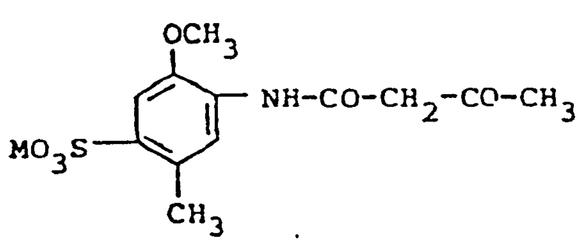

dans laquelle M a la signification donnée à la revendication 1, avec le diazoïque d'une amine répondant à la formule générale 4:

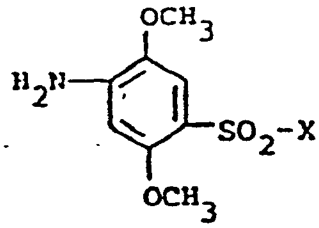

dans laquelle X a la signification donnée à la revendication 1.

5. Composition liquide de colorant qui renferme de 5 à 45 % d'un colorant hydrosoluble selon la revendication 1, et de l'eau.

6. Composition liquide de colorant qui renferme de 5 à 45% d'un colorant hydrosoluble selon la revendication 2, et de l'eau.

7. Composition liquide de colorant selon l'une des revendications 5 et 6, qui contient en outre de 0 à 6% d'un sel minéral inerte.

8. Composition liquide de colorant selon l'une quelconque des revendications 5, 6 et 7; dans laquelle le sel minéral inerte est choisi dans l'ensemble constitué par les chlorures et les sulfates de métaux alcalins et d'ammonium et les mélanges de ces sels.

9. Composition liquide de colorant selon l'une quelconque des revendications 5, 6, 7 et 8, qui contient de 10 à 20 % du colorant hydrosoluble.

10. Composition liquide de colorant selon l'une quelconque des revendications 5, 6, 7, 8 et 9, qui et maintenue à un pH d'environ 2,5 à environ 4,5.

11. Application d'un colorant selon la revendication 1 pour la coloration d'une matière fabriquée avec des fibres de cellulose, de laine, de soie et/ou de polyamides.

12. Procédé pour colorer une matière fabriquée avec des fibres de cellulose, de laine, de soie et/ou de polyamides,procédé selon lequel on met en contact une solution aqueuse du colorant de formule 1 selon la revendication 1 avec ladite matière, et l'on soumet la matière ainsi traitée à l'action de la chaleur et/ou d'un agent ayant une réaction alcaline.